(19) Europäisches Patentamt

European Patent Office

Office européen des brevets

(11) **EP 0 855 368 B1**

(12) **EUROPÄISCHE PATENTSCHRIFT**

(45) Veröffentlichungstag und Bekanntmachung des Hinweises auf die Patenterteilung:
**14.11.2001 Patentblatt 2001/46**

(51) Int Cl.7: **C01B 33/18**, C01B 13/24

(21) Anmeldenummer: **98100505.1**

(22) Anmeldetag: **14.01.1998**

(54) **Pyrogene Oxide und Verfahren zu ihrer Herstellung**

Pyrogenic oxides and process for the preparation thereof

Oxydes pyrogéniques et leur procédé de préparation

(84) Benannte Vertragsstaaten:
**BE DE FR GB NL SE**

(30) Priorität: **23.01.1997 DE 19702230**

(43) Veröffentlichungstag der Anmeldung:
**29.07.1998 Patentblatt 1998/31**

(73) Patentinhaber: **Degussa AG**
**40474 Düsseldorf (DE)**

(72) Erfinder:
• **Mangold, Helmut, Dr.**
**63517 Rodenbach (DE)**
• **Plambeck-Fischer, Peer, Dr.**
**Mobile, AL 36695 (US)**
• **Pauli, Ingo, Dr.**
**Mobile, AL 36693 (US)**
• **Janzon, Karlheinz, Dr.**
**63571 Gelnhausen-Hailer (DE)**

(56) Entgegenhaltungen:
WO-A-95/29872      DE-A- 2 132 428
DE-A- 2 153 671      DE-A- 3 045 190
DE-A- 19 530 339      DE-C- 900 574

• PATENT ABSTRACTS OF JAPAN vol. 009, no. 021 (C-263), 29.Januar 1985 & JP 59 169922 A (TOKUYAMA SODA KK), 26.September 1984,

**Beschreibung**

Die Erfindung betrifft pyrogene Oxide und ein Verfahren zu ihrer Herstellung sowie ihre Verwendung als Poliermittel.

Es ist bekannt, pyrogenes Siliciumdioxid und auch andere Metall- oder Metalloidoxide mittels der Hochtemperaturflammenhydrolyse herzustellen (Ullmanns Enzyklopädie der Technischen Chemie 4. Auflage, Band 21 Seiten 464 ff).

Dabei werden Metall und/oder Metalloidhalogenverbindungen, wie zum Beispiel Siliciumhalogenverbindungen oder Organosiliciumhalogenverbindungen, in einem Brenner bekannter Bauart zusammen mit (Luft-)Sauerstoff und Wasserstoff gemischt und verbrannt. Anschließend wird die entstandene pyrogene Kieselsäure von den salzsäurehaltigen Gasen abgetrennt und eventuell am Oxid noch anhaftendes Chlorid durch Behandlung mit wasserdampfhaltiger Luft entfernt.

Die bekannten Oxide haben den Nachteil, daß sie bei der Verwendung bei der CMP-Polierung eine zu geringe Polierleistung aufweisen.

Es besteht somit die Aufgabe, ein pyrogen hergestelltes Oxid mit einer verbesserten Polierleistung zu entwickeln.

Gegenstand der Erfindung ist ein Verfahren zur Herstellung von pyrogenen Oxiden nach dem Hochtemperaturflammenhydrolyseverfahren, welches dadurch gekennzeichnet ist, daß das Wasserstoffverhältnis gamma (des Rohstoffgasgemisches im Zentralrohr) bei der Herstellung von pyrogenem Oxid unter 1 liegt, und zwar bevorzugt zwischen 0,7 und 0,9, wobei gleichzeitig das Sauerstoffverhältnis lambda (des Rohstoffgasgemisches im Zentralrohr) ebenfalls unter 1 liegt und zwar bevorzugt zwischen 0,7 und 0,9, wobei gamma das Verhältnis von eingespeistem Wasserstoff zuzüglich Wasserstoff aus den Rohstoffen zu stöchiometrisch benötigtem Wasserstoff und lambda das Verhältnis von eingespeistem Sauerstoff zu stöchiometrisch benötigtem Sauerstoff ist.

Ein weiterer Gegenstand der Erfindung ist ein pyrogenes Metall- oder Metalloidoxid, bevorzugt das Siliciumdioxid, hergestellt mittels dem erfindungsgemäßen Verfahren, welches dadurch gekennzeichnet ist, daß während der Herstellung das Wasserstoffverhältnis gamma (des Rohstoffgasgemisches im Zentralrohr) unter 1 liegt, und zwar bevorzugt zwischen 0,7 und 0,9, wobei gleichzeitig das SauerstoffverhäLtnis lambda (des Rohstoffgasgemisches im Zentralrohr) ebenfalls unter 1 liegt und zwar bevorzugt zwischen 0,7 und 0,9.

Ein weiterer Gegenstand der Erfindung ist ein pyrogenes Siliciumdioxid, hergestellt mittels dem erfindungsgemäßen Verfahren, welches dadurch gekennzeichnet ist, daß die BET-Oberfläche des Siliciumdioxids zwischen 30 und 150 m$^2$/g liegt, und eine aus dem pyrogenen Oxid hergestellte 19-prozentige wäßrige Suspension eine Viskosität von weniger als 2500 mPas aufweist, bevorzugt von weniger als 1000 mPas.

Ein weiterer Gegenstand der Erfindung ist ein pyrogenes Siliciumdioxid, hergestellt mittels dem erfindungsgemäßen Verfahren, welches dadurch gekennzeichnet ist, daß die BET-Oberfläche des Siliciumdioxids zwischen 30 und 150 m$^2$/g liegt, und die fraktale BET- Dimension bestimmt durch $N_2$-Adsorption im Druckbereich $p/p_0 = 0,5$ bis $0,8$ nach der fraktalen BET-Theorie für die Mehrlagenadsorption nach dem von Pfeifer, Obert und Cole angegebenen Verfahren (Proc. R. Soc. London, A 423, 169 (1989)) kleiner als 2,605 ist.

Die Herstellung von pyrogenen Oxiden geschieht üblicherweise in der Art, daß die gasförmigen Ausgangsstoffe in einem derartigen stöchiometrischen Verhältnis zueinander stehen, daß der Wasserstoff, der entweder in den Rohstoffen vorhanden ist oder extern dem Brenngasgemisch zugeführt wird, mindestens ausreicht um mit dem im Brenngasgemisch vorhandenen Chlor (aus den Siliciumhalogenverbindungen) zu HCl-Gas abzureagieren. Die hierfür benötigte Menge an Wasserstoff wird als stöchiometrische Wasserstoffmenge bezeichnet.

Das Verhältnis von dem dem Brenner zugeführten Wasserstoff (externer Wasserstoff plus chemisch gebundener Wasserstoff aus den Rohstoffen) zu dem soeben definierten stöchiometrisch erforderlichen Wasserstoff wird als gamma (γ) bezeichnet. Es bedeutet demnach:

$$\gamma = \text{dem Brenner zugeführter Wasserstoff / stöchiometrisch benötigte Wasserstoffmenge}$$

oder

$$\text{Gamma} = H_2 \text{ eingespeist (Mol)/ } H_2 \text{ stöchiometrisch (Mol)}$$

Weiterhin wird bei der Herstellung von pyrogenen Oxiden eine Sauerstoffmenge (beispielsweise aus der Luft) eingesetzt, die mindestens ausreicht um die Siliciumverbindungen in Siliciumdioxid zu überführen und eventuell noch vorhandenen überschüssigen Wasserstoff zu Wasser umzusetzen.

Diese Sauerstoffmenge wird als stöchiometrische Sauerstoffmenge bezeichnet.

Analog wird das Verhältnis von dem dem Brenner zugeführten Sauerstoff zum stöchiometrisch benötigten Sauerstoff als lambda ($\lambda$) bezeichnet. Es bedeutet demnach:

$$\lambda = \text{dem Brenner zugeführter Sauerstoff / stöchiometrisch benötigte Sauerstoffmenge}$$

oder

$$\text{Lambda} = O_2 \text{ eingespeist (Mol)}/ O_2 \text{ stöchiometrisch (Mol)}$$

Folgendes Beispiel soll die Verwendung der Begriffe gamma und lambda verdeutlichen:

1 kg $SiCl_4$ wird mit 0,5 $Nm^3$ Wasserstoff und 3 $Nm^3$ Luft verbrannt.

Die Grundreaktionsgleichung lautet:

$$SiCl_4 + 2\,H_2 + O_2 ==> SiO_2 + 4\,HCl$$

Pro Mol $SiCl_4$ werden also 2 Mole Wasserstoff und 1 Mol Sauerstoff benötigt.

Wird 1 kg $SiCl_4$ (5,88 Mol) umgesetzt, dann ist der stöchiometrische Wasserstoffbedarf 2 x 5,88 Mol = 0,263 $Nm^3$ Wasserstoff.

Wird 1 kg $SiCl_4$ mit 0,5 $Nm^3$ Wasserstoff verbrannt so errechnet sich gamma zu gamma = 0,5/0,263 = 1,9.

Der stöchiometrische Sauerstoffbedarf setzt sich aus zwei Anteilen zusammen, und zwar einerseits aus dem Anteil (a), der benötigt wird, um das Siliciumdioxid zu bilden, und einem zweiten Anteil (b), um überschüssigen Wasserstoff in Wasser zu überführen.

So errechnet sich der stöchiometrische Sauerstoffbedarf für obiges Beispiel folgendermaßen:

Menge a): Bildung von $SiO_2$ = 5,88 Mol = 0,131 $Nm^3$ ($O_2$ )

Menge b): Wasserbildung der nicht mit $SiCl_4$ umgesetzten Menge an Wasserstoff (in $Nm^3$ : 0,5 - 0,263 = 0,237 $Nm^3$ unumgesetzter Wasserstoff der gemäß $H_2$ + 1/2 $O_2$ ==> $H_2O$ eine Menge von 0, 237/2 = 0,118 $Nm^3$ Sauerstoff erfordert.)

Stöchiometrischer Sauerstoffbedarf = Menge a plus Menge b = 0,131 + 0,118 = 0,249 $Nm^3$ ($O_2$)

Beim Einsatz von 3 $Nm^3$ Luft (mit einem Sauerstoffgehalt von 21,0 Vol.% $O_2$ , entsprechend = 0,63 $Nm^3$ Sauerstoff) errechnet sich der Parameter lambda wiefolgt.

$$\text{Lambda} = 0,63 / (0,131 + 0,118) = 2,53$$

Für Rohstoffe, die bereits Wasserstoff im Molekül enthalten, wie z.B. Trichlorsilan, wird bei der Rechnung der im Molekül enthaltende Wasserstoff wie zusätzlich eingespeister Wasserstoff gerechnet.

Für Moleküle, die Kohlenstoff im Molekül enthalten, muß bei der Berechnung des stöchiometrischen Sauerstoffbedarfs berücksichtigt werden, daß dieser Kohlenstoff vollständig zu $CO_2$ abreagieren muß.

Bei der Herstellung von pyrogenen Oxiden unterscheidet man zwischen der offenen und geschlossenen Betriebsweise.

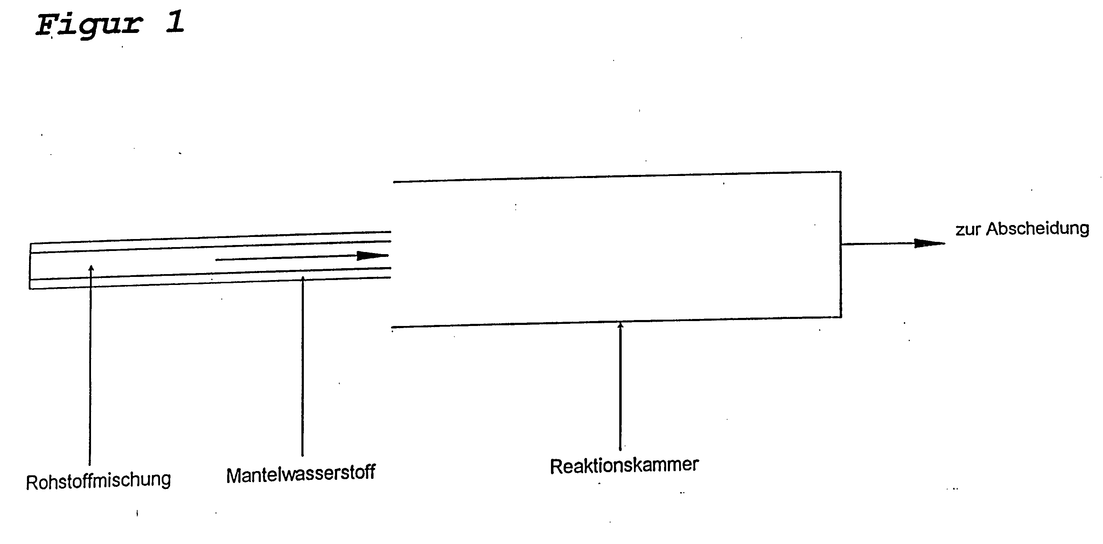

Bei der offenen Betriebsweise brennt die Reaktionsmischung in eine gegenüber der Atmosphäre offenen Reaktionskammer, in welcher Unterdruck herrscht, wobei Umgebungsluft mit in die Reaktionskammer eingesaugt wird. (Figur 1).

Die gasförmige Rohstoffmischung wird in einem Brenner bekannter Bauart homogen vorgemischt und verbrennt in der Reaktionskammer. Zur Vermeidung von Anbackungen wird um die ringförmige Ausströmdüse, aus der das Rohstoffgemisch ausströmt, eine zweite ringförmige Ausströmdüse gelegt, aus welcher (Mantel-)Wasserstoff strömt.

Definitionsgemäß werden bei der weiteren Betrachtungsweise und bei der Berechnung der Flammenparameter nur die Massenströme, die im Zentralrohr vorgemischt werden, berücksichtigt. Dies bedeutet beispielsweise, daß sich die Angabe "unterstöchiometrisch" nur auf die Verhältnisse im Zentralrohr und nicht auf die in der Reaktionskammer bezieht.

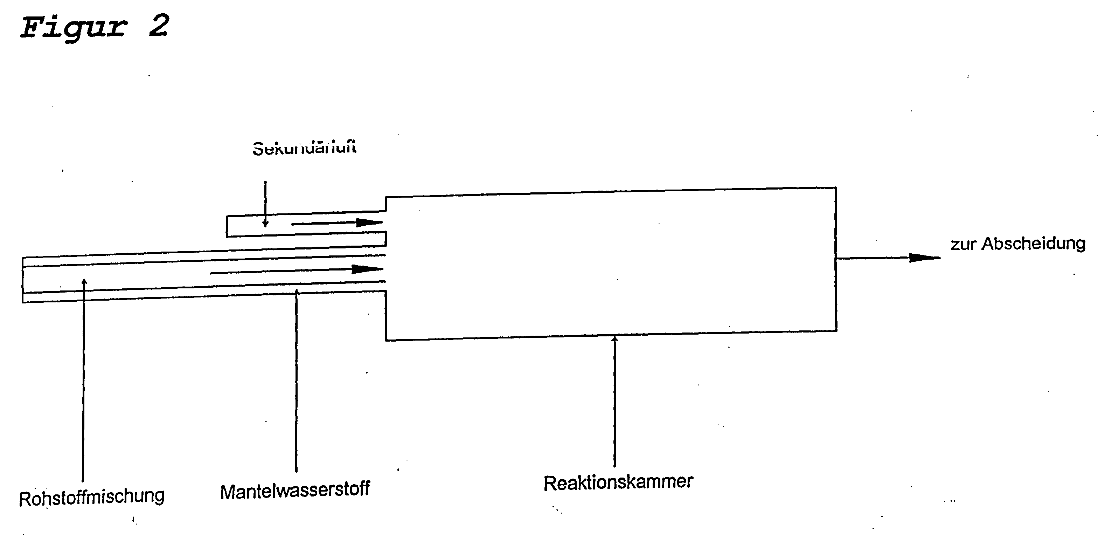

Bei der geschlossenen Betriebsweise (Figur 2) brennt die Reaktionsmischung in eine gegenüber der Atmosphäre abgeschlossenen Reaktionskammer. Bei dieser Betriebsweise wird in der Regel eine genau gemessene Menge an Sekundärluft zugegeben um die Bildung explosiver Gemische zu vermeiden.

Beim normalen Eetrieb der Reaktoren zur Herstellung von pyrogenen Oxiden werden sowohl bei offener als auch bei geschlossener Eetriebsweise Gamma-Werte von größer 1 (zur Vermeidung der Chlorbildung) sowie Lambda-Werte größer 1 (zur Vermeidung explosibler Gemische) angestrebt.

Wird aus den pyrogenen Oxiden eine wäßrige Dispersion hergestellt, so zeigt sich erfindungsgemäß, daß bei der CMP-Anwendung dieser Dispersionen die erzielten Abtragsraten (bei gleicher spezifischer Oberfläche des eingesetzten pyrogenen Siliciumdioxids) in kritischer Weise von den Parametern bei Gamma und Lambda bei der Herstellung des pyrogenen Oxids abhängen.

Insbesondere findet man dann eine erhöhte Polierabtragsrate, wenn bei der Herstellung des pyrogenen Oxids sowohl die Gamma-Werte von kleiner 1 als auch die Lambda-Werte von kleiner 1 eingestellt werden.

Die erfindungsgemäß hergestellten Oxide zeigen bei der CMP-Anwendung eine deutlich erhöhte Abtragsrate gegenüber bekannten Oxide mit gleicher spezifischer Oberfläche ohne Verschlechterung der Oberflächenrauhigkeit.

Dies wird anhand der folgenden Beispiele näher erläutert.

Alle folgenden Beispiele wurden bei offener Betriebsweise durchgeführt (Figur 1).

Verfahren zur Bestimmung der Polierrate und der Herstellung der zwölfprozentigen Dispersion

Die Bestimmung der Polierrate erfolgt mit einer auf die pyrogenen Oxide bezogenen zwölfprozentigen Dispersion. Die Herstellung der Dispersion und das Verfahren zur genauen Bestimmung der Abtragsrate ist in der WO 95/06690, Seite 6 beim Beispiel 1a, beschrieben. Die Polierrate der zwölfprozentigen Dispersion, die aus der pyrogenen Kieselsäure des Beispiels 3 hergestellt wurde, wird als Standard definiert und gleich eins (1) gesetzt.

Da die Bestimmung der Polierrate erst geraume Zeit nach der Herstellung der pyrogenen Kieselsäure erfolgt, wird zur schnellen Charakterisierung der pyrogenen Kieselsäure eine 19-%.ige wäßrige Dispersion hergestellt. Diese 19-prozentige Dispersion dient zur Betriebskontrolle und Charakterisierung der Kieselsäure.

Die Herstellung der 19-prozentigen Dispersion geschieht folgendermaßen: 38 g pyrogenes Oxid und 162 g entionisiertes Wasser werden 5 Minuten mit einem Dissolver bei 2500 U/min gerührt. Die Viskositätsmessung erfolgt mit einem Brookfield-Viskositätsmeßgerät DV 2 bei 5 U/min (Spindelgröße 2). Die Bestimmung des Wertes erfolgt nach einer Minute.

Beispiel 1: (Niedrige Abtragsrate)

2000 kg/h einer Rohstoffmischung, die zu 84 Gew.% aus Siliciumtetrachlorid und zu 16 Gew.% aus Trichlorsilan besteht, werden verdampft und in einem Brenner bekannter Bauart mit 1325 Nm$^3$/h Luft sowie mit 360 Nm$^3$/h einer Gasmischung A, die zu 94 Vol.% aus Wasserstoff und zu 6 Vol.% aus Trichlorsilan sowie mit 177 Nm$^3$/h einer Gasmischung B, die zu 90,4 Vol.% aus Wasserstoff, 5,6 Vol.% Stickstoff, 0,6 Vol.% Kohlenmonoxid und 3,4 Vol.% Methan besteht, gemischt. Das Gasgemisch wird entzündet, die entstehende pyrogene Kieselsäure von den Gasen abgetrennt und nach der Behandlung mit Wasserdampf (zur Entsäuerung) die spezifische Oberfläche nach BET bestimmt. Diese beträgt 85 m$^2$/g.

Von den im Zentralrohr gemischten Rohstoffen werden die Flammenparameter berechnet. Der Flammenparameter gamma wird zu 1,02, der Parameter lambda zu 0,90 berechnet.

Aus der so hergestellten Kieselsäure wird eine 12-prozentige wäßrige Dispersion hergestellt, mit der ein Polierversuch zur Polierung von Siliciumdioxidschichten durchgeführt wird.

Die relative Abrasionsrate der Dispersion bei der Polierung beträgt 0,86.

Beispiel 2: (Niedrige Abtragsrate)

2000 kg/h einer Rohstoffmischung, die zu 84 Gew.% aus Siliciumtetrachlorid und zu 16 Gew.% aus Trichlorsilan besteht, werden verdampft und in einem Brenner bekannter Bauart mit 1285 Nm$^3$/h Luft sowie mit 385 Nm$^3$/h einer Gasmischung A, die zu 94 Vol.% aus Wasserstoff und zu 6 Vol.% aus Trichlorsilan sowie mit 180 Nm$^3$/h einer Gasmischung B, die zu 90,4 Vol.% aus Wasserstoff, 5,6 Vol.% Stickstoff, 0,6 Vol.% Kohlenmonoxid und 3,4 Vol.% Methan besteht, gemischt. Das Gasgemisch wird entzündet, die entstehende pyrogene Kieselsäure von den Gasen abgetrennt und nach der Behandlung mit Wasserdampf (zur Entsäuerung) die spezifische Oberfläche nach BET bestimmt. Diese beträgt 85 m$^2$/g.

Von den im Zentralrohr gemischten Rohstoffen werden die Flammenparameter berechnet. Der Flammenparameter gamma wird zu 1,01, der Parameter lambda zu 0,88 berechnet.

Aus der so hergestellten Kieselsäure wird eine 12-prozentige wäßrige Dispersion hergestellt, mit der ein Polierversuch zur Polierung von Siliciumdioxidschichten durchgeführt wird.

Die relative Abrasionsrate der Dispersion bei der Polierung beträgt 0,86.

Beispiel 3: (Gute Abtragsrate)

2000 kg/h einer Rohstoffmischung, die zu 96 Gew.% aus Siliciumtetrachlorid und zu 4 Gew.% aus Trichlorsilan besteht, werden verdampft und in einem Brenner bekannter Bauart mit 1100 Nm$^3$/h Luft sowie mit 281 Nm$^3$/h einer Gasmischung A, die zu 94 Vol.% aus Wasserstoff und zu 6 Vol.% aus Trichlorsilan sowie mit 229 Nm$^3$/h einer Gasmischung B, die zu 90,4 Vol.% aus Wasserstoff, 5,6 Vol.% Stickstoff, 0,6 Vol.% Kohlenmonoxid und 3,4 Vol.% Methan besteht, gemischt. Das Gasgemisch wird entzündet, die entstehende pyrogene Kieselsäure von den Gasen abgetrennt und nach der Behandlung mit Wasserdampf (zur Entsäuerung) die spezifische Oberfläche nach BET bestimmt. Diese beträgt 82 m$^2$/g.

Von den im Zentralrohr gemischten Rohstoffen werden die Flammenparameter berechnet. Der Flammenparameter gamma wird zu 0,92, der Parameter lambda zu 0,77 berechnet.

Aus der so hergestellten Kieselsäure wird eine 12-prozentige wäßrige Dispersion hergestellt, mit der ein Polierversuch zur Polierung von Siliciumdioxidschichten durchgeführt wird.

Die relative Abrasionsrate der Dispersion bei der Polierung beträgt 1.

Beispiel 4: (Gute Abtragsrate)

2000 kg/h einer Rohstoffmischung, die zu 96 Gew.% aus Siliciumtetrachlorid und zu 4 Gew.% aus Trichlorsilan besteht, werden verdampft und in einem Brenner bekannter Bauart mit 1100 Nm$^3$/h Luft sowie mit 260 Nm$^3$/h einer Gasmischung A, die zu 94 Vol.% aus Wasserstoff und zu 6 Vol.% aus Trichlorsilan sowie mit 260 Nm$^3$/h einer Gasmischung B, die zu 90,4 Vol.% aus Wasserstoff, 5,6 Vol.% Stickstoff, 0,6 Vol.% Kohlenmonoxid und 3,4 Vol.% Methan besteht, gemischt. Das Gasgemisch wird entzündet, die entstehende pyrogene Kieselsäure von den Gasen abgetrennt und nach der Behandlung mit Wasserdampf (zur Entsäuerung) die spezifische Oberfläche nach BET bestimmt. Diese beträgt 81 m$^2$/g.

Von den im Zentralrohr gemischten Rohstoffen werden die Flammenparameter berechnet.Der Flammenparameter gamma wird zu 0,94, der Parameter lambda zu 0,77 berechnet.

Aus der so hergestellten Kieselsäure wird eine 12-prozentige wäßrige Dispersion hergestellt, mit der ein Polierversuch zur Polierung von Siliciumdioxidschichten durchgeführt wird.

Die relative Abrasionsrate der Dispersion bei der Polierung beträgt 0,99.

Beispiel 5: (Gute Abtragsrate)

2000 kg/h einer Rohstoffmischung, die zu 96 Gew.% aus Siliciumtetrachlorid und zu 4 Gew.% aus Trichlorsilan besteht, werden verdampft und in einem Brenner bekannter Bauart mit 1175 Nm$^3$/h Luft sowie mit 260 Nm$^3$/h einer Gasmischung A, die zu 94 Vol.% aus Wasserstoff und zu 6 Vol.% aus Trichlorsilan sowie mit 260 Nm$^3$/h einer Gasmischung B, die zu 90,4 Vol.% aus Wasserstoff, 5,6 Vol.% Stickstoff, 0,6 Vol.% Kohlenmonoxid und 3,4 Vol.% Methan besteht, gemischt. Das Gasgemisch wird entzündet, die entstehende pyrogene Kieselsäure von den Gasen abgetrennt und nach der Behandlung mit Wasserdampf (zur Entsäuerung) die spezifische Oberfläche nach BET bestimmt. Diese beträgt 90 m$^2$/g.

Von den im Zentralrohr gemischten Rohstoffen werden die Flammenparameter berechnet. Der Flammenparameter gamma wird zu 0,94, der Parameter lambda zu 0,82 berechnet.

Aus der so hergestellten Kieselsäure wird eine 12-prozentige wäßrige Dispersion hergestellt, mit der ein Polierversuch zur Polierung von Siliciumdioxidschichten durchgeführt wird.

Die relative Abrasionsrate der Dispersion bei der Polierung beträgt 0,98.

Beispiel 6: (Gute Abtragsrate)

1900 kg/h einer Rohstoffmischung, die zu 84 Gew.% aus Siliciumtetrachlorid und zu 16 Gew.% aus Trichlorsilan besteht, werden gemeinsam mit 100 kg/h Propyltrichlorsilan verdampft und in einem Brenner bekannter Bauart mit 1400 Nm$^3$/h Luft sowie mit 330 Nm$^3$/h einer Gasmischung A, die zu 94 Vol.% aus Wasserstoff und zu 6 Vol.% aus Trichlorsilan sowie mit 150 Nm$^3$/h einer Gasmischung B, die zu 90,4 Vol.% aus Wasserstoff, 5,6 Vol.% Stickstoff, 0,6 Vol.% Kohlenmonoxid und 3,4 Vol.% Methan besteht, gemischt. Das Gasgemisch wird entzündet, die entstehende pyrogene Kieselsäure von den Gasen abgetrennt und nach der Behandlung mit Wasserdampf (zur Entsäuerung) die spezifische Oberfläche nach BET bestimmt. Diese beträgt 86 m$^2$/g.

Von den im Zentralrohr gemischten Rohstoffen werden die Flammenparameter berechnet. Der Flammenparameter gamma wird zu 0,92, der Parameter lambda zu 0,89 berechnet.

Aus der so hergestellten Kieselsäure wird eine 12-prozentige wäßrige Dispersion hergestellt, mit der ein Polierversuch zur Polierung von Siliciumdioxidschichten durchgeführt wird.

Die relative Abrasionsrate der Dispersion bei der Polierung beträgt 0,95.

Beispiel 7: (Niedrige Abtragsrate)

2000 kg/h einer Rohstoffmischung, die zu 96 Gew.% aus Siliciumtetrachlorid und zu 4 Gew.% aus Trichlorsilan besteht, werden verdampft und in einem Brenner bekannter Bauart mit 1125 $Nm^3$/h Luft sowie mit 350 $Nm^3$/h einer Gasmischung A, die zu 94 Vol.% aus Wasserstoff und zu 6 Vol.% aus Trichlorsilan sowie mit 250 $Nm^3$/h einer Gasmischung B, die zu 90,4 Vol.% aus Wasserstoff, 5,6 Vol.% Stickstoff, 0,6 Vol.% Kohlenmonoxid und 3,4 Vol.% Methan besteht, gemischt. Das Gasgemisch wird entzündet, die entstehende pyrogene Kieselsäure von den Gasen abgetrennt und nach der Behandlung mit Wasserdampf (zur Entsäuerung) die spezifische Oberfläche nach BET bestimmt. Diese beträgt 84 $m^2$/g.

Von den im Zentralrohr gemischten Rohstoffen werden die Flammenparameter berechnet. Der Flammenparameter gamma wird zu 1,03, der Parameter lambda zu 0,78 berechnet.

Aus der so hergestellten Kieselsäure wird eine 12-prozentige wäßrige Dispersion hergestellt, mit der ein Polierversuch zur Polierung von Siliciumdioxidschichten durchgeführt wird.

Die relative Abrasionsrate der Dispersion bei der Polierung beträgt 0,88.

Beispiel 8: (Hohe Abtragsrate)

2000 kg/h einer Rohstoffmischung, die zu 84 Gew.% aus Siliciumtetrachlorid und zu 16 Gew.% aus Trichlorsilan besteht, werden verdampft und in einem Brenner bekannter Bauart mit 1125 $Nm^3$/h Luft sowie mit 320 $Nm^3$/h einer Gasmischung A, die zu 94 Vol.% aus Wasserstoff und zu 6 Vol.% aus Trichlorsilan sowie mit 125 $Nm^3$/h einer Gasmischung B, die zu 90,4 Vol.% aus Wasserstoff, 5,6 Vol.% Stickstoff, 0,6 Vol.% Kohlenmonoxid und 3,4 Vol.% Methan besteht, gemischt. Das Gasgemisch wird entzündet, die entstehende pyrogene Kieselsäure von den Gasen abgetrennt und nach der Behandlung mit Wasserdampf (zur Entsäuerung) die spezifische Oberfläche nach BET bestimmt. Diese beträgt 85 $m^2$/g.

Von den im Zentralrohr gemischten Rohstoffen werden die Flammenparameter berechnet. Der Flammenparameter gamma wird zu 0,82, der Parameter lambda zu 0,79 berechnet.

Aus der so hergestellten Kieselsäure wird eine 12-prozentige wäßrige Dispersion hergestellt, mit der ein Polierversuch zur Polierung von Siliciumdioxidschichten durchgeführt wird.

Die relative Abrasionsrate der Dispersion bei der Polierung beträgt 1,04.

Die Einstelldaten der aufgeführten Versuche sind in Tabelle 1 zusammengefaßt.

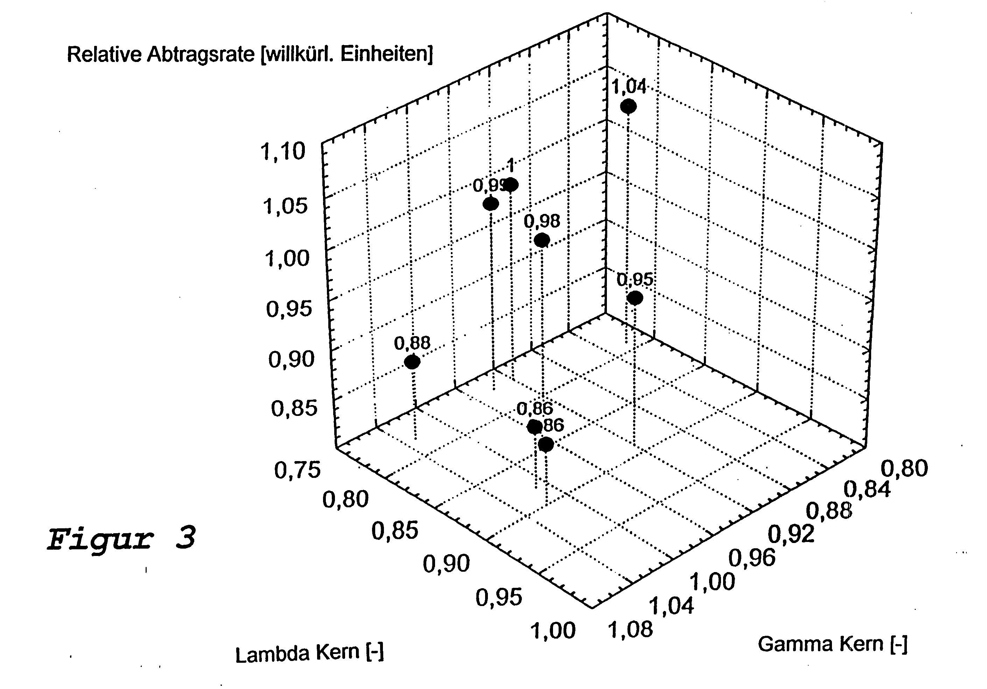

Die Abhängigkeit der relativen Abtragsrate bei der Polierung in Abhängigkeit von den Flammenparametern gamma und lambda ist in Figur 3 dargestellt.

Erkennbar ist, daß die höchsten Abtragsraten der Dispersion dann gefunden werden, wenn die Flammenparameter bei der Herstellung der pyrogenen Oxide deutlich unter dem Wert 1, und bevorzugt zwischen 0,9 und 0,7 liegen.

Die unterschiedliche Abtragsrate äußert sich auch in der unterschiedlichen Viskosität von wäßrigen Suspensionen, die aus den pyrogenen Oxiden hergestellt wurden.

Aus Tabelle 1 folgt, daß ein umgekehrter Zusammenhang zwischen Viskosität der wäßrigen Suspension und der Abtragsrate vorhanden ist.

Die nach dem erfindungsgemäßen Verfahren hergestellten pyrogenen Kieselsäuren weisen gegenüber den nach dem bekannten Verfahren hergestellten pyrogenen Kieselsäuren eine verminderte fraktale Dimension auf. Die verminderte fraktale Dimension geht einher mit einer erhöhten Abtragsrate.

Die Bestimmung der fraktalen Dimension erfolgte durch $N_2$-Adsorption im Druckbereich $p/p_0$ = 0,5 bis 0,8. Die Auswertung der Meßergebnisse erfolgte nach der fraktalen BET-Theorie für die Mehrlagenadsorption nach dem von Pfeifer, Obert und Cole angegebenen Verfahren. (Proc. R. Soc. London, A 423, 169 (1989)).

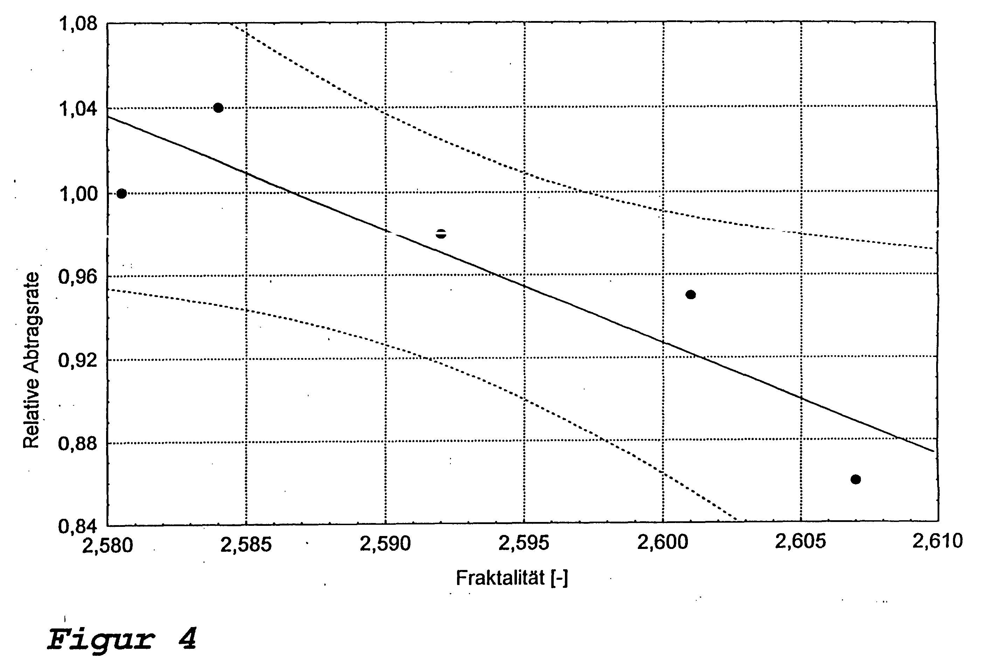

Die Abhängigkeit der Abtragsrate von der gefundenen Fraktalität ist in Figure 4 dargestellt. Zusätzlich dort eingezeichnet ist neben der Ausgleichsgeraden die 95%-Konfidenzkurve.

Tabelle 1

| Beispiel Nr. | Rohstoff | PTS | Luft Kern | Mischg. A | Mischg. B | Gamma Kern | Lambda Kern | Abtrags rate | BET | Visk. 19 %/ | Fraktale Dimension |
|---|---|---|---|---|---|---|---|---|---|---|---|
| | Flußrate [kg/h] | [kg/h] | [Nm3/h] | [Nm3/h] | [Nm3/h] | [-] | [-] | [Willk. Einheiten] | [m$^2$/g] | [mPas] | |
| 1 | 2000 /R1 | 0 | 1325 | 360 | 177 | 1,02 | 0,9 | 0,86 | 85 | | 2,607 |
| 2 | 2000 /R1 | 0 | 1285 | 385 | 180 | 1,01 | 0,88 | 0,86 | 85 | | |
| 3 | 2000 / R2 | 0 | 1100 | 281 | 229 | 0,92 | 0,77 | 1 | 82 | 400 | 2,581 |
| 4 | 2000 / R2 | 0 | 1100 | 260 | 260 | 0,94 | 0,77 | 0,99 | 81 | | |
| 5 | 2000 / R2 | 0 | 1175 | 260 | 260 | 0,94 | 0,82 | 0,98 | 90 | | 2,592 |
| 6 | 1900 /R1 | 100 | 1400 | 330 | 150 | 0,92 | 0,89 | 0,95 | 86 | 1058 | 2,601 |
| 7 | 2000 /R2 | 0 | 1125 | 350 | 250 | 1,03 | 0,78 | 0,88 | 84 | | |
| 8 | 2000 /R1 | 0 | 1125 | 320 | 125 | 0,82 | 0,79 | 1,04 | 85 | 52 | 2,584 |

R1 = Rohstoff 1 = 16 Gew.% Trichlorsilan, 84 Gew% Siliciumtetrachlorid
R2 = Rohstoff 2 = 4 Gew% Trichlorsilan, 96 Gew% Siliciumtetrachlorid
PTS = Propyltrichlorsilan
Mischg. A = siehe Text
Mischg. B = siehe Text
Gamma Kern: Wasserstoffverhältnis im Zentralrohr
lambda Kern : Sauerstoffverhältnis im Zentralrohr
Abtragsrate relativ zu Beispiel 3 (per definitionen = 1)

EP 0 855 368 B1

**Patentansprüche**

1.  Verfahren zur Herstellung von pyrogenen Oxiden nach dem Hochtemperaturflammenhydrolyseverfahren, **dadurch gekennzeichnet, daß** das Wasserstoffverhältnis gamma (des Rohstoffgasgemisches im Zentralrohr) bei der Herstellung von pyrogenem Oxid unter 1 liegt, und zwar bevorzugt zwischen 0,7 und 0,9, wobei gleichzeitig das Sauerstoffverhältnis lambda (des Rohstoffgasgemisches im Zentralrohr) ebenfalls unter 1 liegt und zwar bevorzugt zwischen 0,7 und 0,9,wobei gamma das Verhältnis von eingespeisten Wasserstoff zuzüglich Wasserstoff aus den Rohstoffen zu stöchiometrisch benötigtem Wasserstoff und lambda das Verhältnis von eingespeistem Sauerstoff zu stöchiometrisch benötigtem Sauerstoff ist.

2.  Ein pyrogenes Metall- oder Metalloidoxid, bevorzugt das Siliciumdioxid, hergestellt nach dem Verfahren des Anspruchs 1, **dadurch gekennzeichnet, daß** während der Herstellung das Wasserstoffverhältnis gamma (des Rohstoffgasgemisches im Zentralrohr) unter 1 liegt, und zwar bevorzugt zwischen 0,7 und 0,9, wobei gleichzeitig das Sauerstoffverhältnis lambda (des Rohstoffgasgemisches im Zentralrohr) ebenfalls unter 1 liegt und zwar bevorzugt zwischen 0,7 und 0,9.

3.  Ein pyrogenes Siliciumdioxid hergestellt nach dem Verfahren genäß Anspruch 1, **dadurch gekennzeichnet, daß** die BET-Oberfläche des Siliciumdioxids zwischen 30 und 150 $m^2/g$ liegt, und eine aus dem pyrogenen Oxid hergestellte 19-prozentige wäßrige Suspension eine Viskosität von weniger als 2500 mPas aufweist, bevorzugt von weniger als 1000 mPas.

4.  Ein pyrogenes Siliciumdioxid hergestellt nach dem Verfahren gemäß Anspruch 1, **dadurch gekennzeichnet, daß** die BET-Oberfläche des Siliciumdioxids zwischen 30 und 150 $m^2/g$ liegt, und die fraktale BET- Dimension bestimmt durch $N_2$-Adsorption im Druckbereich $p/p_0$ = 0,5 bis 0,8 nach der fraktalen BET-Theorie für die Mehrlagenadsorption nach dem von Pfeifer, Obert und Cole angegebenen Verfahren. (Proc. R. Soc. London, A 423, 169 (1989)) kleiner als 2,605 ist.

5.  Verwendung der nach dem Verfahren gemäß Anspruch 1 hergestellten pyrogenen Oxide als Rohstoff zur Herstellung von Dispersionen, welche für CMP-Anwendungen eingesetzt werden.

6.  Verwendung der nach dem Verfahren gemäß Anspruch 1 hergestellten pyrogenen Oxide als Rohstoff zur Herstellung von Dispersionen, welche für Polieranwendungen in der Elektronikindustrie eingesetzt werden.

**Claims**

1.  Process for the production of pyrogenic oxides by the method of high-temperature flash hydrolysis, **characterised in that** the hydrogen ratio gamma (of the raw material/gas mixture in the central tube) is below 1 for the production of pyrogenic oxide, and preferably between 0.7 and 0.9, whereby at the same time the oxygen ratio lambda (of the raw material/gas mixture in the central tube) is likewise below 1 and preferably between 0.7 and 0.9, whereby gamma is the ratio of charged hydrogen plus hydrogen from the raw materials to stoichiometrically required hydrogen and lambda is the ratio of charged oxygen to stoichiometrically required oxygen.

2.  A pyrogenic metal or non-metal oxide, preferably silicon dioxide, produced by the process according to claim 1, **characterised in that** during production the hydrogen ratio gamma (of the raw material/gas mixture in the central tube) is below 1, and preferably between 0.7 and 0.9, whereby at the same time the oxygen ratio lambda (of the raw material/gas mixture in the central tube) is likewise below 1 and preferably between 0.7 and 0.9.

3.  A pyrogenic silicon dioxide produced by the process according to claim 1, **characterised in that** the BET surface area of the silicon dioxide is between 30 and 150 $m^2/g$, and a 19% aqueous suspension prepared from the pyrogenic oxide displays a viscosity of less than 2500 mPas, preferably less than 1000 mPas.

4.  A pyrogenic silicon dioxide produced by the process according to claim 1, **characterised in that** the BET surface area of the silicon dioxide is between 30 and 150 $m^2/g$, and the fractal BET dimension determined by $N_2$ adsorption in the pressure range $p/p_0$ = 0.5 to 0.8 according to the fractal BET theory for multilayer adsorption by the method cited by Pfeifer, Obert and Cole (Proc. R. Soc. London, A 423, 169 (1989)) is less than 2.605.

5.  Use of the pyrogenic oxides produced by the process according to claim 1 as a raw material for the preparation

**EP 0 855 368 B1**

of dispersions, which are used for CMP applications.

6. Use of the pyrogenic oxides produced by the process according to claim 1 as a raw material for the preparation of dispersions, which are used for polishing applications in the electronics industry.

**Revendications**

1. Procédé de préparation d'oxydes pyrogéniques selon le procédé d'hydrolyse à la flamme à haute température, **caractérisé en ce que** le rapport d'hydrogène gamma (du mélange de gaz brut dans le tube central) dans la préparation de l'oxyde pyrogénique se situe en-dessous de 1, et de préférence entre 0,7 et 0,9, où simultanément le rapport d'oxygène lambda (du mélange de gaz brut dans le tube central) se situe également en-dessous de 1 et de préférence entre 0,7 et 0,9, où gamma est le rapport de l'hydrogène consommé y compris l'hydrogène provenant des matières premières, à l'hydrogène stoechiométriquement nécessaire, et lambda est le rapport de l'oxygène consommé à l'oxygène stoechiométriquement nécessaire.

2. Oxyde de métal ou de métalloïde pyrogénique, de préférence le dioxyde de silicium, préparé selon le procédé de la revendication 1, **caractérisé en ce que** pendant la préparation le rapport d'hydrogène gamma (du mélange de gaz brut dans le tube central) est inférieur à 1, et de préférence entre 0,7 et 0,9, où simultanément le rapport d'oxygène lambda (du mélange de gaz brut dans le tube central) est également inférieur à 1 et de préférence entre 0,7 et 0,9.

3. Dioxyde de silicium pyrogénique préparé conformément au procédé selon la revendication 1, **caractérisé en ce que** la surface BET du dioxyde de silicium est entre 30 et 150 m$^2$/g, et une suspension aqueuse à 19 % préparée à partir de l'oxyde pyrogénique présente une viscosité inférieure à 2500 mPas, de préférence inférieure à 1000 mPas.

4. Dioxyde de silicium pyrogénique préparé conformément au procédé selon la revendication 1, **caractérisé en ce que** la surface BET du dioxyde de silicium se situe entre 30 et 150 m$^2$/g, et la dimension BET fractale déterminée par adsorption d'azote dans l'intervalle de pression $p/p_0 = 0,5$ à 0,8 selon la théorie BET fractale pour l'adsorption sur plusieurs couches selon le procédé indiqué par Pfeifer, Obert et Cole (Proc. R. Soc. London, A 423, 169 (1989)), est inférieure à 2,605.

5. Utilisation des oxydes pyrogéniques préparés conformément au procédé selon la revendication 1, comme matière première pour la production de dispersions qui sont employées pour des applications CMP.

6. Utilisation des oxydes pyrogéniques préparés conformément au procédé selon la revendication 1 comme matière première pour la préparation de dispersions qui sont employées pour des applications de polissage dans l'industrie électronique.

9

*Figur 1*

zur Abscheidung

Reaktionskammer

Mantelwasserstoff

Rohstoffmischung

10

## Figur 2

Sekundärluft

zur Abscheidung

Rohstoffmischung

Mantelwasserstoff

Reaktionskammer

EP 0 855 368 B1

Relative Abtragsrate [willkürl. Einheiten]

1,10
1,05
1,00
0,95
0,90
0,85

Gamma Kern [-]

0,80
0,84
0,88
0,92
0,96
1,00
1,04
1,08

Lambda Kern [-]

1,00
0,95
0,90
0,85
0,80
0,75

1,04
0,95
0,98
1
0,9
0,86
0,86
0,88

*Figur 3*

*Figur 4*